# EUROPÄISCHE PATENTSCHRIFT

(11) **EP 4 106 111 B1**
(45) Veröffentlichungstag und Bekanntmachung des Hinweises auf die Patenterteilung: **12.02.2025**
(21) Anmeldenummer: 22173314.0
(22) Anmeldetag: 13.05.2022
(51) Int. Cl.: H01R 13/453, A47J 43/046, H01R 24/76, H01R 24/78, H01R 24/68, H01R 103/00

(54) **ELEKTRISCHES HAUSHALTSGERÄT MIT BERÜHRSCHUTZ FÜR ELEKTRISCHE KONTAKTE**
ELECTRICAL HOUSEHOLD APPLIANCE WITH CONTACT PROTECTION FOR ELECTRICAL CONTACTS
APPAREIL ÉLECTROMÉNAGER POURVU DE PROTECTION CONTRE LE CONTACT POUR CONTACTS ÉLECTRIQUES

(30) Priorität: 18.06.2021 DE 102021206293
(43) Veröffentlichungstag der Anmeldung: 21.12.2022
(73) Patentinhaber: Vorwerk & Co. Interholding GmbH, 42270 Wuppertal (DE)
(72) Erfinder: CHAROPOULOS, Philipp, 40878 Ratingen (DE); JANSEN, Dr., Sebastian, 44803 Bochum (DE); POHL, Stephan, 42113 Wuppertal (DE)
(74) Vertreter: Gille Hrabal Partnerschaftsgesellschaft mbB Patentanwälte

(56) Entgegenhaltungen:
- FR-A- 1 273 012
- US-A1- 2020 136 289

## Beschreibung

Die Erfindung betrifft ein Elektrogerät mit Berührschutz für elektrische Kontakte. Das Elektrogerät ist insbesondere ein elektrisches Haushaltsgerät.

FR 1 273 012 A offenbart eine wasserdichte Steckdose, bei der die Buchsen des Buchsenteils mit Gleitstöpseln versehen sind, die elastisch so weit gedrückt werden, dass sie die Außenseite des Buchsenteils dicht verschließen, wenn die Steckdose nicht in Gebrauch ist. Bei Benutzung der Steckdose werden die Gleitstöpsel gegen die elastische Wirkung am Boden der Buchsen zurückgeschoben, wenn die Stifte eingesteckt sind. US 2020 / 136 289 A1 beschreibt einen elektrischen Steckverbinder mit verbesserter Sicherheit. Die Außenfläche der Steckerbuchse ist mit einem nichtleitenden Isoliermaterial beschichtet oder daraus hergestellt. Ein druckbeaufschlagter Isolierstecker ist im Inneren der Buchse angeordnet. Eine elektrische Verbindung wird hergestellt, wenn der Steckverbinder in die Buchse eingeführt wird. Wenn der Stift entfernt wird, drückt der Druckmechanismus des Isoliersteckers den Stecker bündig mit der äußeren isolierten Oberfläche heraus, wodurch die Buchse berührungssicher wird.

Es gibt ein elektrisches Haushaltsgerät mit der Bezeichnung Thermomix Friend^{®}. Dieses Haushaltsgerät ist Gegenstand der europäischen Patentanmeldung mit dem amtlichen Aktenzeichen 20175328.2. Das Haushaltsgerät Thermomix Friend^{®} umfasst ein Standteil und ein Gefäß mit einem darin befindlichen Rührwerkzeug. Das Gefäß kann in das Standteil eingesetzt werden. Das Gefäß umfasst eine elektrische Heizeinrichtung und mit der Heizeinrichtung verbundene elektrische Stecker. Die elektrischen Stecker stehen vom Gefäßboden nach unten ab. Das Standteil umfasst elektrische Buchsen, in die die elektrischen Stecker des Gefäßes eingesetzt sind, wenn das Gefäß in das Standteil eingesetzt ist. Die elektrische Heizeinrichtung kann dann über das Standteil mit Strom für ein Heizen versorgt werden. Die Erfindung betrifft auch ein solches elektrisches Haushaltsgerät.

Mit der vorliegenden Erfindung wird angestrebt, solche elektrischen Buchsen, also elektrische Kontakte, vor unplanmäßigen Berührungen zu schützen.

Um dieses Ziel zu erreichen, umfasst ein Elektrogerät die Merkmale des ersten Anspruchs. Vorteilhafte Ausgestaltungen ergeben sich aus den abhängigen Ansprüchen.

Das Elektrogerät ist insbesondere ein elektrisches Haushaltsgerät. Das Elektrogerät umfasst elektrische Kontakte und einen Zugang zu den elektrischen Kontakten zur Herstellung einer elektrischen Steckverbindung. Es gibt eine elektrische Isolierung, die vor einer Berührung der elektrischen Kontakte schützt. Es gibt zumindest zwei Bolzen als Teil der elektrischen Isolierung. In einer elektrisch isolierenden Stellung sind die Bolzen durch die elektrischen Kontakte hindurchgeführt. Die Bolzen können unabhängig voneinander bewegt werden. Die Bolzen können von der elektrisch isolierenden Stellung in eine elektrisch nicht isolierende Stellung nur dann bewegt werden, wenn die beiden Bolzen gemeinsam bewegt werden.

Ein Elektrogerät ist ein Gerät, welches für seinen Betrieb elektrischen Strom benötigt. Das Elektrogerät kann einen elektrischen Motor umfassen. Das Elektrogerät kann eine elektronische Steuerung umfassen. Das Elektrogerät kann eine Eingabeeinrichtung umfassen, um elektrische Komponenten des Elektrogeräts bedienen zu können. Das Elektrogerät kann als Eingabeeinrichtung einen Schalter umfassen. Das Elektrogerät kann als Eingabeeinrichtung ein berührungsempfindliches Display umfassen. Das Elektrogerät kann als Eingabeeinrichtung ein Mikrofon und eine Spracherkennung umfassen.

Das Elektrogerät kann eine Ausgabeeinrichtung umfassen, um Informationen beispielsweise zum Betrieb des Elektrogeräts ausgeben zu können. Als Ausgabeeinrichtung kann ein Display vorgesehen sein. Als Ausgabeeinrichtung kann ein Lautsprecher vorhanden sein.

Das Elektrogerät kann eine Batterie umfassen, um mit Strom versorgt zu werden. Das Elektrogerät kann ein Kabel und einen Stecker umfassen, der mit einer externen Stromquelle für eine Stromversorgung des Elektrogeräts verbunden werden kann.

Ist das Elektrogerät ein Haushaltsgerät, so ist es ein Gerät, welches dafür bestimmt und geeignet ist, in einem privaten Haushalt eingesetzt zu werden. Es kann sich also beispielsweise um eine Küchenmaschine handeln, mit der eine Speise zubereitet werden kann.

Die elektrischen Kontakte sind dafür bestimmt und geeignet, um mit anderen elektrischen Kontakten verbunden zu werden. Es gibt daher zu jedem elektrischen Kontakt einen Zugang. Durch die Zugänge hindurch können die elektrischen Kontakte durch andere elektrische Kontakte elektrisch kontaktiert werden.

Es gibt eine elektrische Isolierung, die vor einer Berührung der elektrischen Kontakte schützt. Die elektrische Isolierung besteht insbesondere aus Kunststoff. Die elektrische Isolierung deckt die elektrischen Kontakte insbesondere derart vollständig ab, dass die elektrischen Kontakte nicht mehr mit dem Finger einer üblich großen Hand einer erwachsenen Person und/oder eines Kindes erreicht werden können. Der Zugang, der zu einem elektrischen Kontakt führt, weist daher beispielsweise an seiner engsten Stelle einen Durchmesser von nicht mehr als 5 mm auf, damit auch ein Finger eines Kindes den elektrischen Kontakt nicht berühren kann.

Ein Bolzen ist ein länglicher Gegenstand, der durch einen elektrischen Kontakt hindurchreichen kann. Ein Bolzen ist zumindest im Wesentlichen stiftförmig. Da ein Bolzen Teil der elektrischen Isolierung ist, besteht der Bolzen aus einem elektrisch isolierenden Material wie Kunststoff.

Ein jeder Bolzen kann sich in einer elektrisch isolierenden Stellung befinden. In der elektrisch isolierenden Stellung verhindert der Bolzen, dass der zugehörige elektrische Kontakt durch den Zugang hindurch für einen anderen elektrischen Kontakt erreichbar ist. Befindet sich ein Bolzen in seiner elektrisch isolierenden Stellung, so kann kein elektrischer Kontakt zu einem anderen elektrischen Kontakt vorliegen. Der Bolzen muss also aus seiner elektrisch isolierenden Stellung heraus bewegt werden, damit ein anderer elektrischer Kontakt den zum Bolzen gehörenden elektrischen Kontakt elektrisch kontaktieren kann. Befindet sich ein Bolzen in seiner isolierenden Stellung, so ist dieser im Sinne der vorliegenden Erfindung durch seinen zugehörigen elektrischen Kontakt hindurchgeführt.

Die Bolzen können unabhängig voneinander bewegt werden. Die Bolzen können von der elektrisch isolierenden Stellung in eine elektrisch nicht isolierende Stellung allerdings nur dann bewegt werden, wenn die beiden Bolzen gemeinsam bewegt werden. Wird also ein Bolzen mithilfe eines Stiftes von außen gesehen in Richtung seines elektrischen Kontakts gedrückt, so kann der Bolzen seine elektrisch isolierende Stellung nicht verlassen, wenn nicht zeitgleich auch der andere Bolzen in Richtung seines elektrischen Kontaktes gedrückt wird. Ein Kind kann also beispielsweise nicht mithilfe eines elektrisch leitenden Stiftes einen einzelnen Bolzen so bewegen, dass das Kind mithilfe des Stiftes einen elektrischen Kontakt zum elektrischen Kontakt des Bolzens herstellen könnte.

Es kann eine optische Einrichtung vorhanden sein, mit der erkannt wird, wenn nur ein Bolzen von außen gesehen in Richtung seines elektrischen Kontakts bewegt wird. Durch die optische Einrichtung kann ein Blockadeelement in eine blockierende Stellung bewegt werden, wenn die optische Einrichtung erkennt, dass nur ein Bolzen durch Drücken bewegt wird. In der blockierenden Stellung verhindert das Blockadeelement, dass der Bolzen seine elektrisch isolierende Stellung verlassen kann.

In einer Ausgestaltung ist eine Wippe vorhanden, die durch Bewegen von nur einem Bolzen verschwenkt werden kann. Werden die Bolzen abwechselnd hin und her bewegt, so wippt die Wippe. Mit Wippe ist ein länglicher Gegenstand gemeint, der verschwenkt werden und ähnlich wie eine Wippe wippen kann. Die optische Einrichtung kann eine Schwenkbewegung der Wippe erkennen, um dann das Blockieren auszulösen. Durch die Wippe wird also erreicht, dass auf eine technisch einfache Weise zuverlässig erkannt werden kann, wenn nur ein Bolzen bewegt wird.

Enden der Wippe können mit Enden der Bolzen drehbeweglich verbunden sein, um so zu erreichen, dass die Wippe nur dann verschwenkt wird, wenn nur ein Bolzen in Richtung nicht isolierende Stellung bewegt wird.

Enden der Bolzen können auf der Wippe lediglich aufliegen, um so zu erreichen, dass die Wippe nur dann verschwenkt wird, wenn nur ein Bolzen in Richtung nicht isolierende Stellung bewegt wird. Dies minimiert den Herstellungsaufwand.

Ein mittlerer Bereich der Wippe kann durch eine Feder gehalten werden. Die Wippe kann gegen die Kraft der Feder in Richtung Feder bewegt werden. Die Wippe kann daher sowohl verschwenkt als auch ohne eine Schwenkbewegung in Richtung der Feder bewegt werden. Außerdem kann die Wippe anschließend durch die Feder in Richtung Ausgangsstellung zurückbewegt werden. Dadurch können auch die Bolzen in die isolierende Stellung durch die Kraft der Feder zurückbewegt werden. Bei dieser Ausgestaltung genügt eine einzige Feder, um eine Mehrzahl von Bolzen zurück in die Ausgangsstellung bewegen zu können.

Die Feder ist ein elastisch verformbarer Körper. Die Feder besteht aus Stabilitätsgründen vorzugsweise aus Metall. Die Feder kann aber auch beispielsweise aus Kunststoff gefertigt sein. Eine spiralförmige Feder ist zu bevorzugen, da diese besonders einfach mit geringem Bauraum montiert und gehalten werden kann. Die Feder kann aber beispielsweise blattförmig sein.

In einer Ausgestaltung der Erfindung können die Bolzen entlang der Vertikalen bewegt werden, wenn das Elektrogerät bestimmungsgemäß aufgestellt ist. Erwünschte Bewegungen können dadurch vorteilhaft durch Schwerkraft unterstützt werden. Unerwünschte Kräfte aufgrund von Schwerkraft können vermieden werden.

Die Bolzen können insbesondere vertikal durch eine elektrische Abschirmung hindurch bewegt werden. Die elektrische Abschirmung ist Teil der elektrischen Isolierung, die vor einer Berührung der elektrischen Kontakte schützt. Die elektrische Abschirmung kann ein beispielsweise aus Kunststoff bestehendes Gehäuse des Elektrogeräts sein. In einer Ausgestaltung kann für jeden Bolzen eine Feder vorgesehen sein, die jeweils den zugehörigen Bolzen in die elektrisch nicht isolierende Stellung bewegen und in dieser Stellung halten kann. Diese Ausgestaltung ist aber im Vergleich zur vorhergehenden Ausgestaltung mit dem Nachteil verbunden, eine Mehrzahl von Federn einsetzen zu müssen.

Ein Stab, also ein länglicher Gegenstand, kann mit der Wippe verbunden sein und von der Wippe abstehen. Vorzugsweise steht der Stab von einem mittleren Bereich der Wippe ab. Wird die Wippe verschwenkt, so wird auch der Stab verschwenkt. Eine Schwenkbewegung des Stabs kann bewirken, dass ein Schalter betätigt wird. Wird der Schalter betätigt, so kann dadurch ein Blockadeelement in eine blockierende Stellung bewegt werden. In der blockierenden Stellung blockiert das Blockadeelement das Herausbewegen eines Bolzens aus seiner isolierenden Stellung.

Der Stab bzw. ein Ende des Stabs kann in einer Ausgestaltung zu einer Blockadefläche geschwenkt werden. Ist der Stab bzw. sein Ende zur Blockadefläche geschwenkt worden, so kann der Stab nicht weiter aus seiner isolierenden Stellung herausbewegt werden. Die Blockadefläche ist also eine Fläche, die das Herausbewegen des Bolzens aus seiner isolierenden Stellung verhindert, wenn der Stab zur Blockadefläche geschwenkt worden ist. Die Blockadefläche ist aus Fertigungsgründen vorzugsweise eine plane Fläche, die eben ist und keine Wölbungen aufweist. Die Blockadefläche kann aber auch gewölbt sein. Hierdurch wird auf technisch sehr einfache und zuverlässige Weise verhindert, dass ein Bolzen aus seiner isolierenden Stellung bewegt wird.

In einer Ausgestaltung umfasst eine Stufe oder eine Einbuchtung die Blockadefläche. Durch die Stufe bzw. Einbuchtung wird verbessert sichergestellt, dass der zur Blockadefläche geschwenkte Stab die blockierende Stellung nicht unplanmäßig verlassen kann. Insbesondere kann vermieden werden, dass der Stab über die Blockadefläche hinaus geschwenkt werden kann. Die Stufe umfasst eine plane Blockadefläche und eine davon abstehende weitere plane Fläche. Die weitere Fläche steht in der Regel senkrecht oder zumindest im Wesentlichen senkrecht von der Blockadefläche ab. Eine Einbuchtung meint eine nach innen gewölbte Form.

In einer Ausgestaltung ist ein Bolzen mit einem weiteren Bolzen durch ein Verbindungselement verbunden. Das Verbindungselement kann beispielsweise ein Stab sein. Mit Verbindung ist eine feste Verbindung gemeint. Das Verbindungselement kann einteilig mit den Bolzen in einem Arbeitsschritt hergestellt worden sein, so zum Beispiel durch Kunststoffspritzgießen. Der weitere Bolzen ist Teil einer elektrischen Isolierung für einen weiteren elektrischen Kontakt. Diese Ausgestaltung ist von besonderem Vorteil, wenn zumindest drei stromführende elektrische Kontakte durch Bolzen vor einem versehentlichen Berühren geschützt werden sollen, da die Zahl der Bauteile und damit auch der Bauraum besonders klein gehalten werden kann.

Ein Bolzen ist vorzugsweise mit einem Führungselement verbunden, dass durch eine Führungsschiene geführt ist. Durch die Führung des Bolzens wird ein zuverlässiges Funktionieren sichergestellt. Die Schiene ist vorzugsweise im Schnitt U-förmig. Das Führungselement kann dann für eine Führung in die U-Form hineinreichen. Für jedes Führungselement können zwei gegenüberliegende Führungsschienen vorgesehen sein, um den Bolzen besonders zuverlässig zu führen. Das Führungselement kann aber auch umrandet sein. Die Umrandung bildet dann eine Führungsschiene im Sinne der vorliegenden Erfindung, da die Umrandung das Führungselement führt.

Das Führungselement kann eine Platte sein. Eine Platte ist besonders geeignet, um durch zwei gegenüberliegende Führungsschienen stabil und gleichmäßig geführt werden zu können. Außerdem kann eine Platte für einen geeignet tiefen Schwerpunkt sorgen, um einen daran befestigten Bolzen geeignet führen zu können. Bolzen und Platte sind vorzugsweise in einem Arbeitsschritt einstückig gefertigt, so zum Beispiel durch Spritzgießen. Bolzen und Platte können aus Kunststoff bestehen.

Vorzugsweise umfasst ein aus Kunststoff bestehendes Gehäuseteil die Führungsschiene für das Führungselement und/oder den Zugang für einen jeden elektrischen Kontakt. Ein solches Gehäuseteil kann einstückig zum Beispiel aus Kunststoff zum Beispiel durch Spritzgießen gefertigt werden, was die Zahl der Teile und damit den Montageaufwand und den Bauraum vorteilhaft gering hält.

Vorzugsweise ist an der Wippe zumindest ein weiterer Stab befestigt, der durch zumindest eine Halteschiene gehalten wird. Die Lage der Wippe wird also stabilisiert. Dies dient der Betriebssicherheit.

Vorzugsweise ist eine Halbschale vorhanden, die die Halteschiene umfasst und/oder eine Blockadefläche und/oder eine Halterung für ein Halten der Feder. Eine solche Halbschale kann in einem Arbeitsschritt einstückig gefertigt werden. Dies kann beispielsweise durch Spritzgießen geschehen. Die Halbschale kann aus Kunststoff bestehen. Die Zahl der Teile wird vorteilhaft so minimiert und damit der Montageaufwand und der Bauraum.

Das Elektrogerät ist vorzugsweise ein Standteil eines Rührgeräts. Ein Rührgerät im Sinne der vorliegenden Erfindung umfasst neben dem Standteil noch ein Gefäß, in dem eine Speise durch Erhitzen und/oder Rühren zubereitet werden kann. Das Gefäß kann mit dem Standteil verbunden werden. Im Anschluss daran kann eine Speise erhitzt und/oder mit einem Mischwerkzeug bearbeitet werden.

Standteil meint also das Teil eines Rührgeräts, welches für ein Aufstellen auf einem Untergrund, also zum Beispiel auf einer Arbeitsplatte, vorgesehen ist. Ein Standteil kann daher an seiner Unterseite beispielsweise vorstehende Noppen aufweisen. Beispielsweise in eine Ausnehmung des Standteils kann das Gefäß eingesetzt werden.

Das Rührwerkzeug kann im Grund des Gefäßes vorhanden sein. Das Rührwerkzeug kann mit einer Welle verbunden sein, die durch den Gefäßboden hindurchführt. Die Welle kann über eine Kupplung mit der Welle eines Elektromotors verbunden werden, der im Standteil vorhanden ist.

Das Gefäß umfasst eine Heizeinrichtung und daher zwecks Stromversorgung elektrische Kontakte, die über elektrische Kontakte des Standteils mit Strom zu versorgen sind. Die elektrische Kontakte des Gefäßes sind mit den elektrischen Kontakten des Standteils verbunden, wenn das Gefäß mit dem Standteil verbunden ist, also zum Beispiel in eine dafür vorgesehene Ausnehmung des Standteils eingesetzt ist. Die elektrischen Kontakte des Gefäßes sind in der Regel elektrischer Stecker. Die elektrischen Kontakte des Gefäßes können vom Boden des Gefäßes nach unten abstehen.

Die elektrischen Kontakte des Gefäßes sind in einer Ausgestaltung der Erfindung unterschiedlich lang. Die Länge der Bolzen ist dazu korrespondierend unterschiedlich lang. Ist also beispielsweise ein rechts angeordneter elektrischer Stecker kürzer als ein links angeordneter elektrischer Stecker des Gefäßes, dann ist der rechts angeordnete Bolzen des Standteils entsprechend länger als der links angeordnete Bolzen des Standteils. Durch unterschiedliche lange Bolzen bzw. unterschiedliche lange elektrische Kontakte kann also eine Kodierung erreicht werden. Die Sicherheit vor einem unplanmäßigen Berühren von Kontakten wird so verbessert. Dies gilt u. a. deshalb, weil nicht kodierte Fremdgeräte nicht elektrisch mit den elektrischen Kontakten des Standteils verbunden werden können. Dies gilt auch unabhängig von Standteil und Gefäß. Zwei Bolzen eines Elektrogeräts sind also aus Kodierungsgründen vorteilhaft unterschiedlich lang, um so sicherzustellen, dass eine elektrische Verbindung nur mit entsprechend kodierten korrespondierenden Elektrogeräten möglich ist.

Um den Bauraum für das Standteil des Rührgeräts besonders klein halten zu können, ist das Rührgerät vorzugsweise so ausgelegt, dass die maximal mögliche Drehgeschwindigkeit des Rührwerkzeugs 1000 Umdrehungen pro Minute beträgt, mit der das Rührgerät das Rührwerkzeug drehen kann. Vorzugsweise beträgt die maximal mögliche Drehgeschwindigkeit, mit der das Rührgerät das Rührwerkzeug drehen kann, nicht mehr als 400 Umdrehungen pro Minute.

Das Rührgerät kann aber auch mit Drehzahlen von zum Beispiel wenigstens 5000 Umdrehungen pro Minute drehen, wenn es nicht besonders klein sein soll. Zur Vermeidung von Überlastungen sollte die Drehzahl 20000 Umdrehungen pro Minute nicht übersteigen.

Die Erfindung betrifft einen elektrischen Verbinder eines Elektrogeräts, um eine elektrische Steckverbindung herstellen zu können. Die Erfindung kann daher auch lediglich einen elektrischen Verbinder einer elektrischen Steckverbindung betreffen. Ein solcher Verbinder würde dann folglich umfassen: elektrische Kontakte, Zugänge zu den elektrischen Kontakten zur Herstellung einer elektrischen Steckverbindung, eine elektrische Isolierung, die vor einer Berührung der elektrischen Kontakte schützt, zumindest zwei Bolzen als Teil der elektrischen Isolierung, die in einer elektrisch isolierenden Stellung durch die elektrischen Kontakte hindurchgeführt sind, wobei die Bolzen unabhängig voneinander bewegt werden können, wobei die Bolzen weiter von der elektrisch isolierenden Stellung in eine elektrisch nicht isolierende Stellung nur dann bewegt werden können, wenn die beiden Bolzen gemeinsam bewegt werden. Darüber hinaus können solche elektrischen Verbinder wie beschrieben ausgestaltet sein.

Es zeigen
- Figur 1:: elektrische Kontakte mit Berührschutz in elektrisch isolierender Ausgangstellung;
- Figur 2:: elektrische Kontakte mit einem einfach abgesenkten Berührschutz;
- Figur 3:: elektrische Kontakte mit einem doppelt abgesenkten Berührschutz;
- Figur 4:: Wippe;
- Figur 5:: Wippe und Bolzen;
- Figur 6:: aufgeschnittene Ansicht eines Ausführungsbeispiels mit elektrischen Kontakten;
- Figur 7:: elektrische Kontakte und paarweise verbundene Bolzen;
- Figur 8:: Rührgerät.

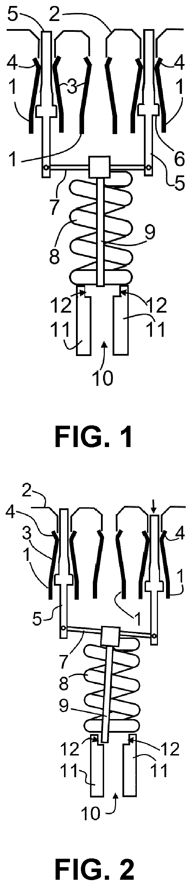

Die Figur 1 zeigt elektrische Kontakte 1 eines Standteils. Die elektrischen Kontakte 1 sind so eingerichtet, dass diese mit elektrischen Kontakten verbunden werden können, die vom Grund eines Gefäßes nach unten abstehen. Die elektrischen Kontakte sind drei aus Metall bestehende elektrische Buchsen 1, die durch ein aus Kunststoff bestehendes, nur teilweise gezeigtes Gehäuseteil 2 des Standteils gehalten werden. Eine jede elektrische Buchse 1 weist ein sich nach oben verjüngendes, klammerartiges Basisteil 3 auf. Die gegenüberliegenden Arme des Basisteils 3 können elastisch gebogen werden. An ein jedes Basisteil 3 schließt sich nach oben eine Aufweitung 4 an, durch die ein Einstecken eines elektrischen Steckers erleichtert wird. Die Aufweitung 4 kann durch Plättchen am oberen Ende von Armen gebildet sein. Eine jede Aufweitung 4 grenzt an der Oberseite an das aus Kunststoff bestehende Gehäuseteil 2 an, sodass das Gehäuseteil 2 dazu beiträgt, vor einem versehentlichen Berühren der elektrischen Buchsen 1 zu schützen. Die elektrischen Kontakte 1 sind auch seitlich und an ihrer Unterseite durch aus Kunststoff bestehende Bauteile abgedeckt und damit vor einem versehentlichen Berühren geschützt. Die elektrischen Kontakte 1 können Crimpkontakte sein.

Die mittlere elektrische Buchse 1 ist ein Schutzleiterkontakt. Es sind daher keine zusätzlichen Maßnahmen erforderlich, die vor einem Berühren der mittleren elektrischen Buchse 1 schützen.

Die beiden äußeren elektrischen Buchsen 1 sind stromführend und daher mit einem separaten Berührungsschutz ausgerüstet. Ein jeder Berührungsschutz für die beiden äußeren elektrischen Buchsen 1 umfasst einen aus Kunststoff bestehenden Bolzen 5. Ein jeder Bolzen 5 ist durch eine stromführende elektrische Buchse 1 hindurchgeführt und ragt sowohl an der Oberseite als auch an der Unterseite aus der zugehörigen Buchse 1 heraus. An der Oberseite schützt der Bolzen 5 vor einem versehentlichen Berühren des zugehörigen elektrischen Kontaktes 1. Ein jeder Bolzen 5 umfasst eine Verbreiterung 6. Die Verbreiterung 6 befindet sich in der in der Figur 1 gezeigten Ausgangsstellung innerhalb des sich nach oben verjüngenden Basisteils 3.

Die unteren Enden der beiden Bolzen 1 sind durch eine Wippe 7 miteinander verbunden oder liegen zumindest auf der Oberseite der Wippe 7 auf. Die Enden der Wippe 7 können schwenkbar mit den unteren Enden der Bolzen 5 verbunden sein oder aber die unteren Enden der beiden Bolzen 1 können auf Enden der Wippe 7 aufliegen. Die Wippe 7 kann daher verschwenkt werden. Es ist ein solcher Kontakt zwischen Wippe 7 und Bolzen 5 vorhanden, dass die Wippe 7 die Bolzen 5 nach oben drücken und die Wippe 7 durch Bewegen eines Bolzens 5 verschwenkt werden kann. Außerdem kann die Wippe 7 durch die beiden Bolzen 5 abgesenkt werden.

Gegen die Unterseite der Wippe 7 drückt eine vorgespannte Feder 8. Mithilfe der Feder 8 und der Wippe 7 werden die Verbreiterungen 6 der Bolzen 5 gegen die das sich nach oben verjüngende Basisteil 3 gedrückt. Die Bolzen 1 werden dadurch in ihrer in der Figur 1 gezeigten Ausgangsstellung gehalten.

Von der Wippe 7 steht ein Stab 9 senkrecht nach unten ab. Der Stab 9 ist in einem mittleren Bereich der Wippe 7 angeordnet. Das untere Ende des Stabs 9 befindet sich oberhalb eines Zwischenraums 10, der von zwei Begrenzungen 11 begrenzt wird. Die Oberseiten der Begrenzungen 11 weisen sich gegenüberliegende Stufen 12 auf. Die Stufen 12 umfassen eine waagerecht verlaufende Blockadefläche und eine Fläche, die nach oben von der Blockadefläche absteht und zwar in der Regel senkrecht.

Die Figur 2 zeigt einen Bolzen 5 auf der rechten Seite, der im Vergleich zur Figur 1 gegen die Kraft der Feder 8 nach unten gedrückt worden ist. Da der links gezeigte Bolzen 5 sich unverändert in seiner elektrisch isolierenden Ausgangsstellung befindet, ist die Wippe 7 auf der rechten Seite nach unten verschwenkt worden. Der Stab 9 ist dadurch in die links gezeigte Stufe 12 hineingeschwenkt worden. Der rechts gezeigte Bolzen 5 kann daher nicht weiter nach unten bewegt werden. Die rechts gezeigte elektrische Buchse 1 kann unverändert nicht berührt werden, weil dies durch den immer noch nach oben vorstehenden Bolzen 5 und das daran angrenzende Gehäuseteil 2 verhindert wird, die die rechts gezeigte elektrische Buchse 5 nach wie vor nach außen abschirmen. Der rechts gezeigte Bolzen 5 kann also nicht aus seiner elektrisch isolierenden Stellung herausbewegt werden.

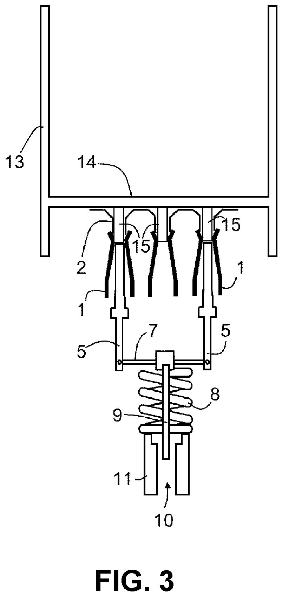

In der Figur 3 wird im Schnitt ein Gefäß 13 mit einem Boden 14 skizziert. Vom Boden 14 stehen elektrische Stecker 15 nach unten ab. Das Gefäß 13 ist in eine Ausnehmung 16 des Standteils eingesetzt. Die Ausnehmung 16 kann mit dem Gehäuseteil 2 einstückig verbunden sein. Die Ausnehmung 16 kann aber auch ein von dem Gehäuseteil 2 getrenntes Teil sein. Die elektrischen Stecker 15 haben die Bolzen 5 gleichzeitig nach unten gedrückt. Deshalb ist die Wippe 7 lediglich gegen die Kraft der Feder 8 abgesenkt, aber nicht verschwenkt worden. Der Stab 9 wurde deshalb nicht in eine Stufe 12 hineingeschwenkt. Die Wippe 7 konnte daher so abgesenkt werden, dass die Stecker 15 wie in der Figur 3 gezeigt die Buchsen 1 elektrisch kontaktieren.

Die Figuren 1 bis 3 zeigen also elektrische Kontakte 1 eines Haushaltsgeräts mit einem Zugang für elektrische Kontakte 15 eines Gefäßes 13 zur Herstellung einer elektrischen Steckverbindung. Es gibt eine elektrische Isolierung 2, 5, die vor einer Berührung der elektrischen Kontakte 1 schützt. Zwei Bolzen 5 sind Teil der elektrischen Isolierung. Die Bolzen 5 können von einer elektrisch isolierenden Stellung in eine elektrisch nicht isolierende Stellung nur dann bewegt werden, wenn die beiden Bolzen 5 gemeinsam bewegt werden.

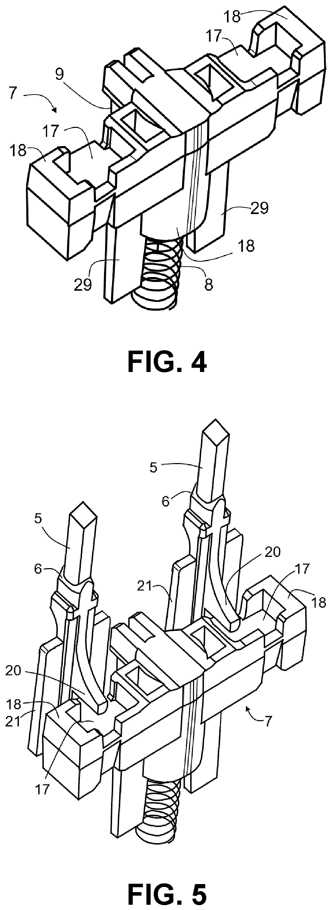

In der Figur 4 wird ein bevorzugtes Ausführungsbeispiel der Wippe 7 gezeigt. Diese umfasst zwei Auflageflächen 17. Die Auflageflächen 17 weisen teilweise eine Umrandung 18 auf. Der Stab 9 ist seitlich von der Wippe 7 angeordnet und mit einem mittleren Bereich der Wippe 7 einstückig verbunden. Der Stab 9 ist also in einem Arbeitsschritt zusammen mit der Wippe 7 beispielsweise durch Kunststoffspritzgießen hergestellt worden. Die Feder 8 reicht mit einem Ende in eine zylinderartige Ausnehmung 19 der Wippe 7 hinein. Die zylinderförmige Ausnehmung 19 ist nach unten offen.

Die Wippe 7 kann zum Beispiel zwei weitere nach unten reichende Stäbe 29 aufweisen, die allerdings so angeordnet sein können, dass diese nicht in eine Stufe 12 für eine Blockade hineinreichen können. Stattdessen können die weiteren Stäbe 29 beispielsweise durch Halteschienen geführt werden, um die Lage der Wippe 7 zu stabilisieren.

In der Figur 5 wird die Wippe 7 zusammen mit einer Ausführungsform von zwei Bolzen 5 gezeigt. Vorsprünge 20 der Bolzen 5 liegen auf den Auflageflächen 17 der Wippe 7 auf und reichen in die Umrandungen 18 hinein. Eine jede Umrandung 18 der Wippe 7 trägt daher zur Lagesicherung der Bolzen 5 bei. Wird ein Bolzen 5 heruntergedrückt, so drückt dieser damit die Auflagefläche 17 der Wippe 7 herunter. Drücken beide Bolzen 5 gleichzeitig herunter, wird die Wippe 7 nach unten abgesenkt. Wird nur ein Bolzen 4 nach unten gedrückt, so wird nur ein Endbereich der Wippe 7 abgesenkt und die Wippe 7 daher verschwenkt. Durch die Kraft der Feder 8 können die Bolzen in ihre Ausgangsstellung zurückbewegt werden.

Die Bolzen 5 sind an ihrer Unterseite mit einer Platte 21 einstückig verbunden. Die Platte 21 dient der Führung des Bolzens 5, um diesen zuverlässig nach oben und nach unten bewegen zu können.

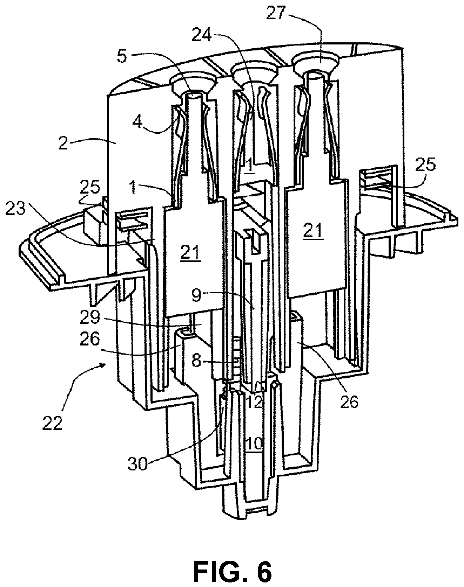

Die Figur 6 zeigt eine Ausführungsform im aufgeschnittenen Zustand mit den Bolzen 5 aus Figur 5 und der Wippe 7 aus den Figuren 4 und 5. Eine aus Kunststoff bestehende Halbschale 22 an der Unterseite umfasst die Stufen 12 und den Zwischenraum 10 für den Stab 9. Außerdem kann die Halbschale 22 die Unterseite der Feder 8 halten. Die Halbschale 22 kann im Schnitt U-förmige Halteschienen 26 für die Stäbe 29 der Wippe 7 aufweisen. Die Halteschienen umgreifen die Stäbe 29 in einem solchen Abstand, dass eine gewünschte Schwenkbewegung der Wippe 7 nicht durch die Halteschienen 26 verhindert wird. Die Halbschale 22 umfasst eine zylinderförmige Halterung 30 für das Halten des unteren Endes der Feder 8. Auf der Oberseite der Halbschale 22 sitzt ein Gehäuseteil 2 auf. Das Gehäuseteil 2 umfasst Führungsschienen 23 für die Platten 21. Die Figur 6 verdeutlicht, dass eine jede Buchse 1 neben zwei Armen mit den Aufweitungen 4 noch einen weiteren Arm 24 für eine elektrische Kontaktierung umfassen kann. Der weitere Arm 24 kann wie in der Figur 6 gezeigt nach hinten versetzt und ansonsten zwischen den beiden Armen, die die Aufweitung 4 bilden, angeordnet sein. Die elektrischen Buchsen 1 werden durch das Gehäuseteil 2 gehalten. Die elektrischen Kontakte können jeweils einen seitlichen Anschluss 25 aufweisen. Die seitlichen Anschlüsse können über weitere elektrische Leiter mit einer Stromquelle verbunden werden. Das Gehäuseteil 2 weist an der Oberseite oberhalb der Buchsen 1 trichterförmige Eintrittsöffnungen 27 für das einfache Hineinstecken von elektrischen Steckern 15 auf.

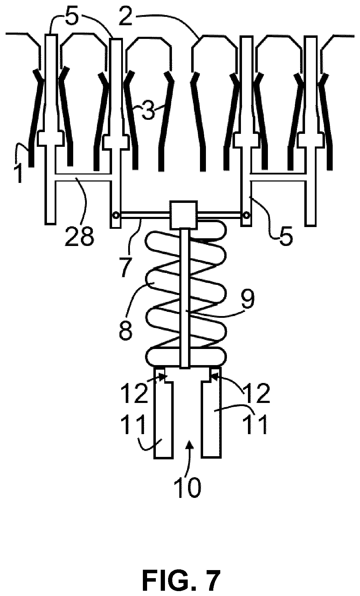

In der Figur 7 wird ein Beispiel mit fünf Kontakten 1 gezeigt. Vier der fünf Kontakte sind stromführende Kontakte. Daher sind durch vier Kontakte 1 Bolzen 5 hindurchgeführt. Die Bolzen 5 sind paarweise durch ein beispielsweise Stabförmiges Verbindungselement 28 miteinander verbunden. Die Verbindungselemente 28 befinden sich unterhalb der Kontakte 1. Ein jedes Paar der Bolzen 5 verhält sich wie ein einzelner Bolzen 5 aus Figur 1. Wird nur Bolzen 5 und damit nur ein Bolzenpaar heruntergedrückt, so wird diese Bewegung blockiert, sobald der Stab 9 in eine Stufe 12 geschwenkt worden ist. Werden beide Bolzenpaare zeitgleich, also gemeinsam heruntergedrückt, so wird der Stab 9 nicht in eine Stufe 12 geschwenkt und die elektrischen Kontakte 1 können durch elektrische Stecker elektrisch kontaktiert werden.

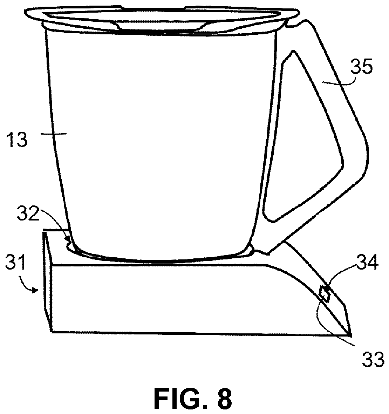

In der Figur 8 wird ein Rührgerät mit einem Standteil 31 und einem Gefäß 13 gezeigt, das in eine Ausnehmung 32 des Standteils 31 eingesetzt ist. Das Standteil verfügt über ein Display 33 und einen Drehknopf 34. Das Gefäß 13 kann mithilfe des Griffs 35 aus der Ausnehmung 32 herausgenommen werden. Das Gefäß 13 und das Standteil 31 sind elektrisch über eine Steckverbindung miteinander verbunden, wie diese in der Figur 3 gezeigt wird.

## Patentansprüche

1. Elektrogerät, insbesondere Haushaltselektrogerät, mit elektrischen Kontakten (1), mit Zugängen (27) zu den elektrischen Kontakten (1) zur Herstellung einer elektrischen Steckverbindung, mit einer elektrischen Isolierung, die vor einer Berührung der elektrischen Kontakte (1) schützt, mit zumindest zwei Bolzen (5) als Teil der elektrischen Isolierung, die in einer elektrisch isolierenden Stellung durch die elektrischen Kontakte (1) hindurchgeführt sind, **dadurch gekennzeichnet, dass** die Bolzen (5) unabhängig voneinander bewegt werden können, wobei die Bolzen (5) weiter von der elektrisch isolierenden Stellung in eine elektrisch nicht isolierende Stellung nur dann bewegt werden können, wenn die beiden Bolzen (5) gemeinsam bewegt werden.

2. Elektrogerät nach dem vorhergehenden Anspruch, **dadurch gekennzeichnet, dass** eine Wippe (7) vorhanden ist, die durch Bewegen von nur einem Bolzen (5) verschwenkt werden kann.

3. Elektrogerät nach dem vorhergehenden Anspruch, **dadurch gekennzeichnet, dass** Enden der Bolzen (5) auf der Wippe (7) aufliegen.

4. Elektrogerät nach einem der zwei vorhergehenden Ansprüche, **dadurch gekennzeichnet, dass** ein mittlerer Bereich der Wippe (7) durch eine Feder (8) gehalten wird.

5. Elektrogerät nach einem der drei vorhergehenden Ansprüche, **dadurch gekennzeichnet, dass** ein Stab (9) mit der Wippe (7) verbunden ist, der von der Wippe (7) absteht.

6. Elektrogerät nach dem vorhergehenden Anspruch, **dadurch gekennzeichnet, dass** das Elektrogerät eine Blockadefläche umfasst und der Stab (9) zu der Blockadefläche geschwenkt werden kann.

7. Elektrogerät nach dem vorhergehenden Anspruch, **dadurch gekennzeichnet, dass** eine Einbuchtung oder eine Stufe (12) die Blockadefläche umfasst.

8. Elektrogerät nach einem der vorhergehenden Ansprüche, **dadurch gekennzeichnet, dass** ein Bolzen (5) der zumindest zwei Bolzen (5) mit einem weiteren Bolzen (5) der zumindest zwei Bolzen (5) durch ein Verbindungselement (28) verbunden ist, wobei der weitere Bolzen (5) der zumindest zwei Bolzen (5) Teil einer elektrischen Isolierung für einen weiteren elektrischen Kontakt ist.

9. Elektrogerät nach einem der vorhergehenden Ansprüche, **dadurch gekennzeichnet, dass** ein Bolzen (5) der zumindest zwei Bolzen (5) mit einem Führungselement (21) verbunden ist, dass durch eine Führungsschiene (23) geführt ist, wobei die Führungsschiene (23) Teil eines aus Kunststoff bestehenden Gehäuseteils (2) ist.

10. Elektrogerät nach dem vorhergehenden Anspruch, **dadurch gekennzeichnet, dass** das Führungselement eine Platte (21) ist.

11. Elektrogerät nach einem der beiden vorhergehenden Ansprüche, **dadurch gekennzeichnet, dass** das aus Kunststoff bestehende Gehäuseteil (2) den Zugang (27) für einen jeden elektrischen Kontakt (1) umfasst.

12. Elektrogerät nach einem der zehn vorhergehenden Ansprüche 2 bis 11, **dadurch gekennzeichnet, dass** an der Wippe (7) zumindest ein weiterer Stab (29) befestigt ist, der durch zumindest eine Halteschiene (26) gehalten wird.

13. Elektrogerät nach dem vorhergehenden Anspruch sowie nach Anspruch 6, **dadurch gekennzeichnet, dass** das Elektrogerät eine Halbschale (22) umfasst, die die Halteschiene (26) umfasst und/oder die Blockadefläche und/oder eine Halterung (30) für ein Halten der Feder (8).

14. Elektrogerät nach einem der vorhergehenden Ansprüche, **dadurch gekennzeichnet, dass** das Elektrogerät ein Standteil (31) eines Rührgeräts ist.

15. Elektrogerät nach dem vorhergehenden Anspruch, **dadurch gekennzeichnet, dass** das Standteil (31) einen Elektromotor und eine Steuerungseinrichtung für eine Heizeinrichtung eines Gefäßes (13) umfasst, das in eine Ausnehmung (32) des Standteils (31) eingesetzt werden kann oder eingesetzt ist.

16. Elektrogerät nach einem der vorhergehenden Ansprüche, **dadurch gekennzeichnet, dass** zwei Bolzen (5) der zumindest zwei Bolzen (5) des Elektrogeräts unterschiedlich lang sind.

## Claims

1. Electrical appliance, in particular electrical household appliance, having electrical contacts (1), having accesses (27) to the electrical contacts (1) for establishing an electrical plug connection, having an electrical sinsulation which protects against touching the electrical contacts (1), having at least two bolts (5) as part of the electrical insulation, which are passed through the electrical contacts (1) in an electrically insulating position, **characterized in that** the bolts (5) can be moved independently of each other, wherein the bolts (5) can be moved further from the electrically insulating position into an electrically non-insulating position only when the two bolts (5) are moved together.

2. Electrical appliance according to the preceding claim, **characterized in that** a rocker (7) is provided which can be pivoted by moving only one bolt (5).

3. Electrical appliance according to the preceding claim, **characterized in that** ends of the bolts (5) rest on the rocker (7).

4. Electrical appliance according to one of the two preceding claims, **characterized in that** a central region of the rocker (7) is held by a spring (8).

5. Electrical appliance according to one of the three preceding claims, **characterized in that** a rod (9) is connected to the rocker (7) and protrudes from the rocker (7).

6. Electrical appliance according to one of the preceding claims, **characterized in that** the electrical appliance comprises a blocking surface and the rod (9) can be pivoted to the blocking surface.

7. Electrical appliance according to the preceding claim, **characterized in that** an indentation or step (12) comprises the blocking surface.

8. Electrical appliance according to one of the preceding claims, **characterized in that** a bolt (5) of the at least two bolts (5) is connected to a further bolt (5) of the at least two bolts (5) by a connecting element (28), wherein the further bolt (5) of the at least two bolts (5) is part of an electrical insulation for a further electrical contact.

9. Electrical appliance according to one of the preceding claims, **characterized in that** a bolt (5) of the at least two bolts (5) is connected to a guide element (21) which is guided by a guide rail (23), wherein the guide rail (23) is part of a housing part (2) consisting of plastic.

10. Electrical appliance according to the preceding claim, **characterized in that** the guide element is a plate (21).

11. Electrical appliance according to one of the preceding claims, **characterized in that** the housing part (2) consisting of plastic comprises the access (27) for each electrical contact (1).

12. Electrical appliance according to one of the ten preceding claims 2 to 11, **characterized in that** at least one further rod (29) is attached to the rocker (7), which is held by at least one holding rail (26).

13. Electrical appliance according to the preceding claim and claim 6, **characterized in that** the electrical appliance comprises a half-shell (22) comprising the holding rail (26) and/or the blocking surface and/or a holder (30) for holding the spring (8).

14. Electrical appliance according to one of the preceding claims, **characterized in that** the electrical appliance is a stand part (31) of a mixer.

15. Electrical appliance according to the preceding claim, **characterized in that** the stand part (31) comprises an electric motor and a control device for a heating device of a vessel (13) which can be inserted or is inserted into a recess (32) of the stand part (31).

16. Electrical appliance according to one of the preceding claims, **characterized in that** two bolts (5) of the at least two bolts (5) of the electrical appliance have different lengths.

## Revendications

1. Appareil électrique, en particulier appareil électrique ménager, avec des contacts électriques (1), avec des accès (27) aux contacts électriques (1) pour réaliser une connexion électrique enfichable, avec une isolation électrique qui protège d'un contact avec les contacts électriques (1), avec au moins deux boulons (5) faisant partie de l'isolation électrique, qui traversent les contacts électriques (1) dans une position électriquement isolante, **caractérisé en ce que** les boulons (5) peuvent être déplacés indépendamment l'un de l'autre, dans lequel les boulons (5) peuvent en outre être déplacés de la position électriquement isolante à une position électriquement non isolante uniquement lorsque les deux boulons (5) sont déplacés ensemble.

2. Appareil électrique selon la revendication précédente, **caractérisé en ce qu'**une bascule est présente (7) qui peut être pivotée par le déplacement que d'un seul boulon (5).

3. Appareil électrique selon la revendication précédente, **caractérisé en ce que** les extrémités des boulons (5) reposent sur la bascule (7).

4. Appareil électrique selon l'une des deux revendications précédentes, **caractérisé en ce qu'**une partie centrale de la bascule (7) est maintenue par un ressort (8).

5. Appareil électrique selon l'une des trois revendications précédentes, **caractérisé en ce qu'**une tige (9) est reliée à la bascule (7) et qui fait saillie de la bascule (7).

6. Appareil électrique selon la revendication précédente, **caractérisé en ce que** l'appareil électrique comprend une surface de blocage et que la tige (9) peut être pivotée vers la surface de blocage.

7. Appareil électrique selon la revendication précédente, **caractérisé en ce qu'**une échancrure ou une marche (12) comprend la surface de blocage.

8. Appareil électrique selon l'une des revendications précédentes, **caractérisé en ce qu'**un boulon (5) des au moins deux boulons (5) est relié à un autre boulon (5) des au moins deux boulons (5) par un élément de liaison (28), dans lequel l'autre boulon (5) des au moins deux boulons (5) fait partie d'une isolation électrique pour un autre contact électrique.

9. Appareil électrique selon l'une des revendications précédentes, **caractérisé en ce qu'**un boulon (5) des au moins deux boulons (5) est relié à un élément de guidage (21) qui est guidé par un rail de guidage (23), dans lequel le rail de guidage (23) fait partie d'une partie de boîtier (2) réalisée en matière plastique.

10. Appareil électrique selon la revendication précédente, **caractérisé en ce que** l'élément de guidage est une plaque (21).

11. Appareil électrique selon l'une des deux revendications précédentes, **caractérisé en ce que** la partie de boîtier (2) réalisée en matière plastique comprend l'accès (27) pour chaque contact électrique (1).

12. Appareil électrique selon l'une des dix revendications précédentes 2 à 11, **caractérisé en ce qu'**au moins une autre tige (29), qui est maintenue par au moins un rail de maintien (26), est fixée à la bascule (7).

13. Appareil électrique selon la revendication précédente ainsi que selon la revendication 6, **caractérisé en ce que** l'appareil électrique comprend une demi-coque (22) qui comprend le rail de maintien (26) et/ou la surface de blocage et/ou une fixation (30) pour un maintien du ressort (8).

14. Appareil électrique selon l'une des revendications précédentes, **caractérisé en ce que** l'appareil électrique est une partie de stand (31) d'un appareil d'agitation.

15. Appareil électrique selon la revendication précédente, **caractérisé en ce que** la partie de stand (31) comprend un moteur électrique et un dispositif de commande pour un dispositif de chauffage d'un récipient (13) qui peut être inséré ou est inséré dans un évidement (32) de la partie de stand (31).

16. Appareil électrique selon l'une des revendications précédentes, **caractérisé en ce que** deux boulons (5) des au moins deux boulons (5) de l'appareil électrique sont de longueurs différentes.
